# EUROPÄISCHE PATENTSCHRIFT

(11) **EP 0 705 685 B1**
(45) Veröffentlichungstag und Bekanntmachung des Hinweises auf die Patenterteilung: **24.03.1999**
(21) Anmeldenummer: 95114605.9
(22) Anmeldetag: 16.09.1995
(51) Int. Cl.: B32B 17/10, C09K 21/02

(54) **Brandschutz-Glaseinheit**
Fire resistant glass unit
Unité de verre résistant au feu

(30) Priorität: 07.10.1994 DE 4435841
(43) Veröffentlichungstag der Anmeldung: 10.04.1996
(73) Patentinhaber: FLACHGLAS AKTIENGESELLSCHAFT, 90766 Fürth (DE)
(72) Erfinder: Nolte, Hans-Henning, Dipl.-Phys., D-45884 Gelsenkirchen (DE); Grünzel, Helga, D-45894 Gelsenkirchen (DE); Harbecke, Bernd, Dr. Dipl.-Phys., D-44879 Bochum (DE)
(74) Vertreter: Honke, Manfred, Dr.-Ing.

(56) Entgegenhaltungen:
- EP-A- 0 542 022
- DE-A- 2 833 385
- US-A- 4 909 845

## Beschreibung

Die Erfindung betrifft eine Brandschutz-Glaseinheit mit zumindest zwei Scheiben, die mit Abstand voneinander angeordnet sind, wobei zumindest die brandseitige Isolierscheibe als eine Glasscheibe ausgeführt und im Abstandsraum zwischen den Scheiben eine im Brandfall aufschäumende Zwischenschicht angeordnet ist, welche Zwischenschicht hauptsächlich aus Natron-Wasserglas und Wasser besteht, sowie eine Zumischung aufweist, die mit organischen Substanzen der Gruppe "mehrwertige Alkohole" oder Mischungen davon versetzt ist. Die Zumischung erhöht die Widerstandszeit im Brandfall. Bei der erfindungsgemäßen Brandschutz-Glaseinheit kann die weitere Scheibe als Glasscheibe oder als Kunststoffplatte ausgeführt sein. Im übrigen kann eine erfindungsgemäße Brandschutz-Glaseinheit neben den zwei Scheiben noch weitere aufweisen die mit Abstand und geeigneten Zwischenschichten angeschlossen sind. Die Zwischenschichten bestehen jedenfalls hauptsächlich aus Natron-Wasserglas. Die Zumischung zur Erhöhung der Widerstandszeit der Brandschutz-Glaseinheit im Brandfall macht regelmäßig 0,5 bis 40 Masseprozent aus. - Eine erfindungsgemäße Brandschutz-Glaseinheit kann für die verschiedensten Zwecke, insbesondere als Trennwand und als Fassadenverkleidung, eingesetzt werden.

Wasserglas bezeichnet im Rahmen der Erfindung glasartig erstarrte Alkali-Silikate, die aus Alkali und Kieselsäure in unterschiedlichen Mengenverhältnissen aufgebaut sind und die durch Zusammenschmelzen geeigneter Ausgangsprodukte erhalten werden. Wasserglas bezeichnet im Rahmen der Erfindung auch die aus diesen Schmelzen hergestellten, stark alkalisch reagierenden wässrigen Lösungen. Natron-Wasserglas oder Natrium-Wasserglas bezeichnet die aus Soda und Sand hergestellten Produkte. Kali-Wasserglas oder Kalium-Wasserglas wird durch Schmelzen von wasserfreier Pottasche und Quarzsand bzw. von Kaliumkarbonat und Quarzsand hergestellt. Die feste Schmelze wird zerkleinert und gelangt als Festglas in den Handel. Wasserglaslösungen, die als flüssiges Wasserglas bezeichnet werden, erhält man durch Lösen von Festglas unter Druck in Wasser und Abfiltrieren der unlöslichen Bestandteile. Zum Herstellen von Brandschutz-Glaseinheiten des beschriebenen Aufbaus geht man von entsprechenden Lösungen aus, die zum Beispiel auf die Glasscheibe aufgebracht und auf dieser durch Verdampfung von überschüssigem Wasser befreit werden. Wird eine Brandschutz-Glaseinheit der Einwirkung von Hitze und Flammen ausgesetzt, so zerspringt die der Hitzeeinwirkung ausgesetzte Glasscheibe, während die Zwischenschicht aus dem Alkali-Silikat unter Absieden des in ihr enthaltenen Wassers zu einer Schaumschicht aufgebläht wird, die dem weiteren Wärmedurchgang wirksam Widerstand entgegensetzt, woraus die eigentliche Brandschutzfunktion resultiert.

Die Erfindung geht aus von einer Brandschutz-Glaseinheit, bei der die Zwischenschicht aus einem festen, wasserhaltigen Alkali-Silikat, welches 10 % bis 40 % Wasser enthält, besteht. Die Dicke der Zwischenschicht beträgt zumindest 0,3 mm. Sie kann aber auch 5 mm betragen (DE-AS 19 00 054). Die insoweit bekannten Maßnahmen haben sich bewährt. Aus der Praxis ist es bekannt, der Zwischenschicht aus produktionstechnischen Gründen und zur Verlängerung der Widerstandszeit der Brandschutz-Glaseinheit organische Zusatzstoffe aus der Gruppe "mehrwertige Alkohole, z. B. Glycol, Sorbit, Glyzerin, sowie unterschiedliche Zuckerarten" oder Mischungen davon beizumischen. Das hat sich bewährt, macht jedoch die Zwischenschicht und damit die Brandschutz-Glaseinheit insgesamt empfindlich gegen ultraviolette Lichtstrahlen. Bei Beaufschlagung mit ultraviolettem Licht tritt durch die Entwicklung von feinen und feinsten Bläschen in der Füllung eine Trübung ein.

Das allgemeine technische Problem, mit dem sich die Erfindung beschäftigt, lautet, bei einer Brandschutz-Glaseinheit des eingangs beschriebenen Aufbaus die Ultraviolett-Empfindlichkeit zu beseitigen. Der Erfindung liegt das konkrete technische Problem zugrunde , bei einer Brandschutz-Glaseinheit des eingangs beschriebenen Aufbaus, deren Zwischenschicht eine die Widerstandszeit im Brandfall erhöhende Zumischung aufweist, die Ultraviolett-Empfindlichkeit zu beseitigen, ohne daß eine Beeinträchtigung der Widerstandszeit in Kauf genommen werden müßte.

Zur Lösung dieser Aufgabe ist Gegenstand der Erfindung eine Brandschutz-Glaseinheit des eingangs beschriebenen Aufbaus, die gekennzeichnet ist durch die Verwendung von Kali-Wasserglas als Zumischungsbestandteil der Zwischenschicht zum Zwecke der Unterdrückung der Empfindlichkeit der Zwischenschicht gegen ultraviolette Lichtstrahlen mit der Maßgabe, daß der Zumischungsbestandteil aus Kali-Wasserglas massemäßig so gewählt ist, daß, abhängig von den Einsatzbedingungen, eine störende Empfindlichkeit gegen ultraviolettes Licht nicht mehr besteht. Es versteht sich, daS die Zwischenschicht, neben dem Natron-Wasserglas, welches gleichsam die Basis der Zwischenschicht darstellt, und Wasser im Rest organische Zusatzstoffe in Form von mehrwertigen Alkoholen und/oder Zucker aufweist. Dieser Rest kann, je nach den Gegebenheiten, klein sein.

Nach der herrschenden Lehre ist bei Brandschutz-Glaseinheiten des eingangs beschriebenen Aufbaus aus produktionstechnischen Gründen und brandschutztechnischen Gründen die eingangs angegebene Beimischung von Zusatzstoffen aus der Gruppe mehrwertiger Alkohole oder Zucker unverzichtbar. Die Erfindung geht von der Erkenntnis aus, daß überraschenderweise diese Beimischungen teilweise oder sehr weitgehend durch Kali-Wasserglas ersetzt werden können, wobei fernerhin überraschenderweise die Widerstandszeit der Brandschutz-Glaseinheit im Brandfall nicht beeinträchtigt wird. Eine störende Ultraviolett-Empfindlichkeit tritt nicht mehr auf. Das Mischungsverhältnis hängt von den optischen Eigenschaften der Scheiben und deren Dicke ab. Es läßt sich experimentell leicht ermitteln.

Es ist aus der DE 28 33 385 A1 an sich bekannt, Mischungen von Natron-Wasserglas und Kali-Wasserglas zu verwenden. Bei der bekannten Ausführungsform wird eine Zumischung einer organischen Substanz, z.B. Zucker, zur Erhöhung der Widerstandszeit im Brandfall vorgesehen. Über die Verwendung des Brandschutzmaterials als Zwischenschicht in Brandschutz-Glaseinheiten, sowie über die Ultraviolett-Empfindlichkeit im Zusammenhang mit der Widerstandszeit wird in der DE 28 33 385 A1 keine Aussage gemacht.

Problemlos können in Rahmen der Erfindung weitere Verbesserungen der Eigenschaften einer erfindungsgemäßen Brandschutz-Glaseinheit verwirklicht werden. Eine bevorzugte Ausführungsform der Erfindung ist dadurch gekennzeichnet, daß die Zwischenschicht im übrigen zum Zwecke der Erhöhung der Viskosität des im Brandfall entstehenden Schaums eine Beimischung aus submikroskopischen Partikeln aus der Gruppe "anorganische Verbindungen von Si, Al, Ti, Zr" oder Mischungen davon aufweist. Eine andere Ausführungsform der Erfindung ist dadurch gekennzeichnet, daß die Zwischenschicht im übrigen zum Zwecke der Erhöhung der Viskosität des im Brandfall entstehenden Schaumes eine Beimischung aus der Gruppe "metallorganische Verbindungen der Elemente der Gruppe Si, Al, Ti, Zr" oder Mischungen davon enthält. Als metallorganische Verbindungen können insbesondere Chelate eingesetzt werden. Nach bevorzugter Ausführungsform der Erfindung weist die Zwischenschicht weniger als 6 Masseprozent an organischen Substanzen auf. Die Beimengung von submikroskopischen Partikeln zur Zwischenschicht einer Brandschutz-Glaseinheit zum Zwecke der Viskositätserhöhung des entstehenden Schaumens ist an sich bekannt.

Zusammenfassend ist folgendes festzustellen: Durch Zumischung von Kali-Wasserglas zu der Zwischenschicht, die entsprechend dem Oberbegriff des Patentanspruches 1 aufgebaut ist, kann die Zugabe der nach der herrschenden Lehre aus produktionstechnischen und brandschutztechnischen Gründen erforderlichen organischen Zusatzstoffe in Form von mehrwertigen Alkoholen oder Zucker vermindert werden. Dadurch werden gleichzeitig das Aufschäumverhalten und die thermische Isolation verbessert. Wird die Standzeit durch die erfindungsgemäße Verwendung verschlechtert, so kann dieses durch eine zusätzliche Zugabe der angegebenen organischen und anorganischen viskositätserhöhenden Verbindungen kompensiert werden. Man erhält ein Brandschutzglas mit vielseitig verbesserten Eigenschaften, nämlich: Verhinderung der UV-Empfindlichkeit, Verhinderung der Entwicklung brennbarer Gase, Vermeidung schädlicher Gase im Brandfall, Vergleichmäßigung des Aufschäumvorganges, bessere thermische Isolation des Schaumes und stark verlängerte Standzeit im Brandfall.

### Ausführungsbeispiel

Um die Eigenschaften der Brandschutzgläser in Abhängigkeit von der Zusammensetzung ihrer Brandschutzschichten beurteilen zu können, wurden zu ihrer Produktion (mit jeweils identischer Struktur) Alkalisilikat-Lösungen mit verschiedenen Zusätzen hergestellt, von denen jeweils die gleiche Menge zur Herstellung der jeweiligen Einheit verwendet wurde. Beurteilt wurden:
- Oberflächenqualität nach der Trocknung
- UV-Stablilität
- Brandverhalten "F" und "G" nach DIN 4102.

Die Zusammensetzung der Lösung vor der Trocknung ist dabei jeweils in Gewichts-% angegeben, die Standzeit im Brandversuch gemäß "F" bzw. "G" in Minuten:

| **Mischung 1:** | Qualität: |
|---|---|
| Natron-Wasserglas ohne Zusätze (27 % SiO2, 8 % Na2O, 65 % Wasser) | |
| 100,00 % Natron-Wasserglas | Oberfläche: sehr schlecht |
| | UV-Stabilität: nicht bestimmbar |
| | "F"-Standzeit: 28 Min. |
| | "G"-Standzeit: 32 Min. |

| **Mischung 2:** | Qualität: |
|---|---|
| 93,50 % Natron Wasserglas wie in Mischung 1 | Oberfläche: gut |
| 6,50 % Glyzerin | UV-Stabilität: schlecht |
| | "F"-Standzeit: 38 Min. |
| | "G"-Standzeit: 45 Min. |

| **Mischung 3**: | Qualität: |
|---|---|
| 93,50 % Natron-Wasserglas wie in Mischung 1, | Oberfläche: gut |
| 1,50 % Glyzerin | UV-Stabilität: gut |
| 5,00 % Kali-Wasserglas | "F"-Standzeit: 28 Min. |
| | "G"-Standzeit: 35 Min. |

| **Mischung 4**: | Qualität: |
|---|---|
| 83,50 % Natron-Wasserglas wie in Mischung 1, | Oberfläche: gut |
| 1,50 Glyzerin | UV-Stabilität: gut |
| 5,00 % Kali-Wasserglas | "F" Standzeit: 38 Min. |
| 10,00 % Suspension submikroskopischer Partikel aus anorganischen SiO2-Verbindungen. | "G"-Standzeit 104 Min. |

Besonders überraschend ist bei der Mischung 4, daß die "G"-Standzeit nicht nur auf den mit der ursprünglichen Mischung 2 erhaltenen Wert zurückgeführt werden, sondern extrem erhöht werden konnte. Überraschend ist ferner, daß durch den weitgehenden Ersatz der organischen Komponente "Glyzerin" durch die anorganische Komponente "Kali-Wasserglas" nicht nur die UV-Empfindlichkeit der Schichten entscheidend verbessert werden konnte, sondern auch die Oberflächen-Qualität der getrockneten Schichten. - Die UV-Empfindlichkeit der unterschiedlichen Musterscheiben wurde in allen Fällen durch Bestrahlen mit Ultra-Vitalux-Lampen im Abstand von 1 m Entfernung ermittelt, wobei der Zeitpunkt bis zum Auftreten von Blasen in der Schicht festgestellt wurde.

Man erkennt, daß durch die Zugabe von Kali-Wasserglas der Glyzerin-Anteil reduziert werden konnte, und darauf beruht die Verbesserung der UV-Stabilität.

## Patentansprüche

1. Brandschutz-Glaseinheit mit zumindest zwei Scheiben, die mit Abstand voneinander angeordnet sind, wobei zumindest die brandseitige Scheibe als eine Glasscheibe ausgeführt und im Abstandsraum eine im Brandfall aufschäumende Zwischenschicht angeordnet ist, welche Zwischenschicht hauptsächlich aus Natron-Wasserglas und Wasser besteht, sowie eine Zumischung zur Erhöhung der Widerstandszeit im Brandfall aufweist, welche Zumischung mit organischen Substanzen der Gruppe "mehrwertige Alkohole, Zucker" oder Mischungen davon versetzt ist, **gekennzeichnet durch** die Verwendung von Kali-Wasserglas als Zumischungsbestandteil der Zwischenschicht zum Zwecke der Unterdrückung der Empfindlichkeit der Zwischenschicht gegen ultraviolette Lichtstrahlen mit der Maßgabe, daß der Zumischungsbestandteil als Kali-Wasserglas massemäßig so gewählt ist, daß, abhängig von den Einsatzbedingungen, eine störende Empfindlichkeit gegen ultraviolettes Licht nicht mehr besteht.

2. Brandschutz-Glaseinheit nach Anspruch 1, dadurch gekennzeichnet, daß die Zwischenschicht zum Zwecke der Erhöhung der Viskosität des im Brandfall entstehenden Schaumes eine Beimischung von submikroskopischen Partikeln aus der Gruppe "anorganische Verbindungen von Si, Al, Ti, Zr" oder Mischungen davon aufweist.

3. Brandschutz-Glaseinheit nach Anspruch 1, dadurch gekennzeichnet, daß die Zwischenschicht zum Zwecke der Erhöhung der Viskosität des im Brandfall entstehenden Schaumes eine Beimischung aus metallorganischen Verbindungen der Elemente der Gruppe "Si, Al, Ti, Zr" oder Mischungen davon aufweist.

4. Brandschutz-Glaseinheit nach Anspruch 3, dadurch gekennzeichnet, daß als metallorganische Verbindungen Chelate eingesetzt sind.

5. Brandschutz-Glaseinheit nach einem der Ansprüche 1 bis 4, dadurch gekennzeichnet, daß die Zwischenschicht weniger als 6 Masseprozent an organischen Substanzen aufweist.

## Claims

1. Fire-resistant glazing unit with at least two panes which are positioned at a distance from one another, where at least the fire-side pane takes the form of a glass pane and in the interspace between the panes is positioned an interlayer which foams in the event of fire, this interlayer consisting principally of sodium water glass and water, as well as incorporating an additive for increasing the resistance time in the event of a fire, to which additive are added organic substances from the group "polyhydric alcohols, sugar" or mixtures thereof, **characterized by** the use of potassium water glass as additive constituent of the interlayer for the purpose of suppressing the sensitivity of the interlayer to ultraviolet light rays, with the provision that the additive constituent of potassium water glass is chosen by mass such that, dependent on the conditions of use, undesirable sensitivity to ultraviolet light no longer exists.

2. Fire-resistant glazing unit in accordance with Claim 1, characterized by the fact that the interlayer, for the purpose of increasing the viscosity of the foam occurring in the event of fire, incorporates an addition of submicroscopic particles from the group "inorganic compounds of Si, Al, Ti, Zr" or mixtures thereof.

3. Fire-resistant glazing unit in accordance with Claim 1, characterized by the fact that, for the purpose of increasing the viscosity of the foam occurring in the event of fire, contains an addition from the group "organometallic compounds of the elements of the group Si, Al, Ti, Zr" or mixtures thereof.

4. Fire-resistant glazing unit in accordance with Claim 3, characterized by the fact that as organo-metallic compounds chelates are used.

5. Fire-resistant glazing unit in accordance with one of Claims 1 to 4, characterized by the fact that the interlayer incorporates less than 6 mass percent of organic substances.

## Revendications

1. Unité de verre pare-feu comportant au moins deux vitres disposées à une certaine distance l'une de l'autre, au moins la vitre du côté du feu étant une vitre en verte, et l'espace séparant les deux vitres contenant une couche intermédiaire formant une mousse en cas d'incendie, laquelle couche intermédiaire est constituée principalement de silicate de soude hydrosoluble et d'eau, et contient un additif destiné à prolonger le temps de résistance en cas d'incendie, lequel additif est mélangé à des substances organiques choisies dans le groupe formé par "les alcools polyfonctionnels, les sucres" et les mélanges de ceux-ci, laquelle unité de verte est caractérisée par le fait que l'on utilise du silicate de potassium hydrosoluble comme fraction de l'additif de la couche intermédiaire dans le but de supprimer la sensibilité de la couche intermédiaire vis-à-vis du rayonnement ultraviolet, avec la réserve que la teneur en poids de la fraction de l'additif, c'est-à-dire du silicate de potassium hydrosoluble, est choisie de manière à ce que, selon les conditions d'utilisation, la sensibilité gênante vis-à-vis de la lumière ultraviolette soit supprimée.

2. Unité de verte pare-feu selon la revendication 1, caractérisée par le fait que la couche intermédiaire contient un additif supplémentaire sous forme de particules submicroniques choisies dans le groupe formé par "les composés minéraux de Si, Al, Ti, Zr" ou des mélanges de ceux-ci, destiné à augmenter la viscosité de la mousse formée en cas d'incendie.

3. Unité de verte pare-feu selon la revendication 1, caractérisée par le fait que la couche intermédiaire contient un additif supplémentaire comprenant des composés organométalliques des éléments du groupe formé par "Si, Al, Ti, Zr" ou des mélanges de ceux-ci, destiné à augmenter la viscosité de la mousse formée en cas d'incendie

4. Unité de verre pare-feu selon la revendication 3, caractérisée en ce que l'on utilise comme composés organométalliques des chélates.

5. Unité de verte pare-feu selon l'une quelconque des revendications 1 à 4, caractérisée en ce que la couche intermédiaire contient moins de 6 % en poids de substances organiques.
